# EUROPEAN PATENT SPECIFICATION

(11) **EP 2 512 101 B1**
(45) Date of publication and mention of the grant of the patent: **07.05.2014**
(21) Application number: 11161841.9
(22) Date of filing: 11.04.2011
(51) Int. Cl.: H04L 29/08, G06F 17/30, H04L 12/24

(54) **Method and system to pre-fetch user-specific HTTP requests for web applications**
Verfahren und System für benutzerspezifischen HTTP-Anfrage-Prefetch für Webanwendungen
Procédé et système de pré-extraction de demandes HTTP spécifiques à l'utilisateur pour applications Web

(43) Date of publication of application: 17.10.2012
(73) Proprietor: Deutsche Telekom AG, 53113 Bonn (DE)
(72) Inventor: Offermann, Philipp, 10717 Berlin (DE); Seidel, Fabian, 14469 Potsdam (DE)
(74) Representative: Vossius & Partner

(56) References cited:
- DE-A1- 19 964 030
- US-A1- 2007 156 845

## Description

### Technical field

The present invention relates to a method and system to pre-fetch user specific HTTP requests for web applications. The invention specifically relates to a method for configuring a pre-fetching web proxy server, a pre-fetching web proxy server, a method and system for handling a first and/or a subsequent user specific HTTP request by means of a pre-fetching configuration file and a respective computer program product.

### Background Art

Desktop application software is more and more replaced by web applications. While desktop application software runs on a client system and does not require a network connection, web applications require a network connection and a compatible web browser. At the time when the World Wide Web (WWW) was invented, web pages where mainly static and the information was encoded using the HyperText Markup Language (HTML) and images, transferred using the Hypertext Transfer Protocol (HTTP). The client used the browser mainly to render and display HTML pages. User-interaction and customization was only possible by communication with the web server delivering the HTML pages. For such communication, HTTP requests methods like parameterized GET-requests and POST-requests are used.

However, current web browsers (e.g. Mozilla Firefox, Apple Safari or Google Chrome) not only render HTML, but also offer programming interfaces that enable web pages to perform computational tasks in the client's web browser and to process user interaction without communication with a web server over a network. The most common programming interface is JavaScript, but other technologies like Java, Adobe Flash and Microsoft Silverlight exist. These interfaces allow changing a web site based on events like mouse or keyboard clicks or changing a web site continuously to create animations and display videos. The changes of a site may be complex and require intense computation, as most programming interfaces offer the capability to process complex algorithms.

These programming interfaces also offer the capability of communicating with the server directly, without loading a page in the browser. To achieve this, an application programming interface (API) like the XMLHttpRequest (XHR) can be used. The interface uses HTTP requests just like a web browser, but rather than rendering the result, the return value is processed by the programming interface of the client's web browser. The information exchanged is often formatted using the Extensible Markup Language (XML), although that is not necessary.

To provide a more rich and interactive user experience, client-side scripting and rendering has been combined with server interactions by combining different technologies under what is often called "Asynchronous JavaScript and XML" (AJAX). Here, the browsers programming interface is used in conjunction with an extensive use of XHR or similar APIs, where the server communication is asynchronous. That means that the browser programming interface submits a request to the server and then asynchronously waits for the response in the background while continuing other processes. XML might be used as message format, although that is not necessary.

For a client to load a web page, the time it takes from a request to the transmission of a page is an important part of the page loading time. The time is influenced by the time the web server takes to respond to a request and the time it takes for the request to travel from the client to the server and for the answer to travel from the server to the client. The travel time through the network is determined by the number of hops on the path through the network and the delay introduced by each hop. The handling time of the web server depends on resource availability on the server.

To speed up page loading times, caching web proxy servers are used. These servers have more functions, but for the invention described here only the caching aspect is of special interest. These web proxy servers are used in a way that whenever a user requests a web page, the user's browser asks the proxy server for that page. There is no direct communication between the user's browser and the web server serving a web page. The web proxy server then looks in its cache if there is a valid up-to-date copy of the requested page available. If so, the page is delivered from the cache. If not, the web proxy server forwards the request to the relevant web server and subsequently forwards the answer to the client.

An advantage of using a caching web proxy is that in case a requested page is cached, it can be served more quickly. Generally, the web proxy server is located nearer to the client in the network. Also, the web proxy server has enough resources available to handle requests quickly, while web servers with less resources and more computational tasks to do might more often be overloaded and take longer to answer a request.

A caching web proxy only speeds up a web site request if the requested page is in the cache. If a page is requested for the first time, the response might even take a bit longer as the request is routed through the web proxy server. However, when a page is loaded, there are methods to guess which pages will be requested next. One such method is to identify all the links in an HTML page. A pre-fetching web proxy will pre-fetch all pages it identifies as relevant to a certain request and store these pages in the cache before they have actually been requested by the user. Thereby, the likelihood that a subsequent request by the user can be served from cache is increased.

All public caching web proxies can only cache certain types of data. The data has to be user-independent, that means that user-specific data usually is not cached as it is only relevant to a single user. Also, the data has to remain valid for a minimal period of time so that the data is up-to-date for long enough to be requested by other users. The HTTP protocol specification discusses how caching is handled in section 13 of RFC 2616 (Hypertext Transfer Protocol-HTTP/1.1). Section 14 of RFC 2616 specifies a Cache-Control header that is used to indicate the cacheability of data transferred over HTTP. Among other parameters, the type (public, private, non-cache) and maximum age of cached data can be specified.

US2009100228 (A1) is concerned with optimizing the cache of a pre-fetching proxy with respect to the page modification time and the necessity to pre-fetch a new version. The publication does not consider user-specific caching and site-specific pre-fetching rules.

US2009019153 (A1) is concerned with aborting a pre-fetching operation.

US2008235239 (A1) relates to a pre-fetching proxy for content filtering, including a content renderer. The method presented here builds on a pre-fetching web proxy, but doesn't include a content renderer and is not concerned with filtering.

US2008208789 (A1) relates to a pre-fetching proxy using concurrent requests. It further relates to serving non-cacheable pre-fetched objects only once while storing cacheable objects in a cache.

JP2006146967 (A) relates to a system and method to optimize web content delivery by analyzing the response to a certain request and using that information to order the response to subsequent requests to the same resource by a different requestor.

EP1533982 (A2) relates to a system and method to pre-fetch content using encrypted connections by rewriting HTML pages.

US2005240574 (A1)) relates to a method and apparatus to pre-fetch resources based on a lookup request at a resource lookup service.

EP1398715 (A2) relates to a method and system to pre-fetch Web content using an upstream and a downstream proxy, assuming a high-latency connection between the proxies. It also relates to how to handle cookies for user-specific data within the pre-fetching process.

FR2858078 (A1)) relates a process to aid pre-fetching decisions based on parameters.

US2002062384 (A1) relates to a pre-fetching proxy.

US6701316 (B1) relates to a method to optimize network usage for content pre-fetching and refreshing.

US6173318 (B1) relates to a data pre-fetching method and apparatus.

US2009094417 (A1) relates to a system and method to insert pre-fetch tags into a requested Web page. These tags are then used by a proxy server to pre-fetch related pages. The tags to be added to a Web page can be configured for each user by a personalization database.

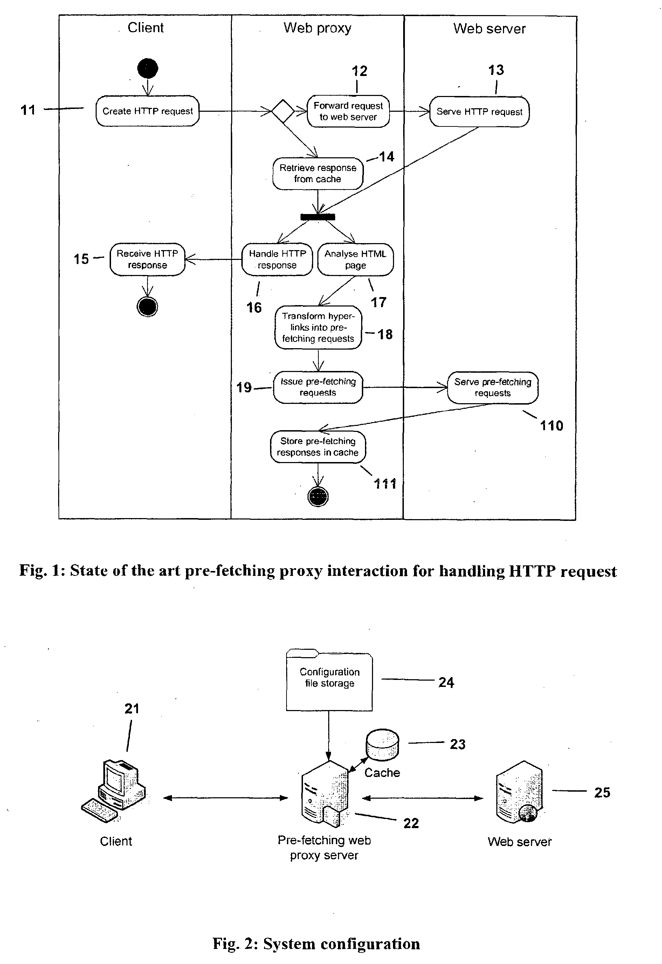

Fig. 1 shows a flow diagram of a known pre-fetching proxy interaction using a pre-fetching proxy server. A client creates an HTTP request in step 11. If the request can be served from the web proxy the response is retrieved from a cache of the web proxy in step 14. Otherwise the request is forwarded to a web server in step 12 which serves the HTTP request in step 13. In either case the response is further handled by the web proxy in step 16 and the response is received by the client in step 15. Furthermore, the HTML is analyzed in step 17. Hyperlinks are transformed into pre-fetching requests in step 18. Subsequently, pre-fetching requests are issued to the web server by the web proxy in step 19. Then, the web server serves those pre-fetching requests to the web proxy in step 110. The pre-fetching responses are stored in the web proxy's cache in step 111 and thus made available for a subsequent HTTP request involving pre-fetching from the web proxy.

US 2007/156845 A1 describes a content delivery network edge server which is configured to provide extended content delivery features on a domain-specific, customer-specific basis. Configuration files are distributed to the edge service using a configuration system. A configuration file can include a set of content handling rules and directors that facilitate advanced content handling features, such as content prefetching.

### Disclosure of the invention

For modem web applications that make heavy use of AJAX, the roundtrip time for XHR calls is decisive for the usability of web applications. However, because they are dynamically generated, these requests cannot be made faster by classical caching or pre-fetching by web proxies. The information exchanged between the client and the web server using HTTP requests is user-specific and data short-lived. Also, identifying which requests to pre-fetch is difficult as the requests often are generated using a client-side programming interface. Therefore, the requests cannot be simply extracted from the transmitted data as is the case with hyperlinks in HTML pages, but would have to be calculated.

It is the objective of the present invention to provide a method and system for handling a first and/or subsequent user specific HTTP request including XHR for web applications, a pre-fetching web proxy server, and a respective computer program product.

This objective is achieved with the features of the independent claims. The dependent claims relate to further aspects of the present invention in particular to a method for configuring a pre-fetching web proxy server.

The invention relates to a method and system to pre-fetch user specific HTTP requests for web applications. Thereby, the response speed for user interactions requiring communication with the server is increased.

The system is based on a pre-fetching web proxy in the following also referred to as a web proxy. The web proxy interacts with a client requesting data and a web server responding to requests. The web proxy is configured by site-specific configuration files. The files specify that, whenever a certain resource including user-specific data is requested, how the resource is analyzed to automatically generate further HTTP requests of which the responses are cached in advance.

Hence, a pre-fetching configuration file is written for a specific website or host. Website, in general, refers to a domain name and/or IP address. Host is defined by the HTTP standard. Throughout the description the terms website and host shall be understood interchangeably. Then, the pre-fetching configuration file is uploaded to the pre-fetching web proxy in order to handle user-generated HTTP requests in the presented manner. Subsequently, the pre-fetching configuration file is used by the web proxy server when receiving a request for a specific website or host, wherein the web proxy server identifies whether further requests should be done for pre-fetching.

The advantage of the system and method according to the present invention is that it speeds up the server communication of modem web applications. Current caching and pre-fetching web proxies are not able to achieve this, as the communication is user-specific and data short-lived. State-of-the-art systems will only speed up transfer for data that is not user-specific and does not change too quickly. The system and method according to the present invention reduces the time it takes to receive a response to an XHR call or other HTTP requests. Thereby, modem web application respond more quickly to user input that requires such a communication.

Another advantage is that AJAX web applications can be speeded up in contrast to the state of the art where the speed up is so far possible for HTML web sites only. Also, it leads to a speed up of delivery of user-specific content. This is an advantage over the state of the art where the speed up was only possible for the delivery of public content. The pre-fetching algorithm is configured for each web application and optimized pre-fetching its efficiency and effectiveness. The state of the art merely comprises generic pre-fetching algorithms.

Furthermore, the method and system according to the present invention can make use of encrypted communication. Thus, the communication between the client system and the web server can be performed by using an encryption scheme, wherein the pre-fetching web proxy server forwards requests from the client system to the web server and forwards any information from the web server to the client system. In this case the web proxy server acts as a man-in-the-middle. According to an embodiment of this invention an encryption scheme can make use of a certificate on the web proxy server. The client accesses the web proxy server directly, indicating which web server should be accessed in the background e.g. by using a web server specific sub domain of the web proxy server. As the communication is performed with the web proxy server directly, the validity of the web proxy server encryption certificate can successfully be verified by the client system. In case the web proxy server fetches information from the web server on behalf of a particular client system, the web server encryption certificate will be used for the encrypted communication between the web proxy server and the web server. An embodiment of the encrypted communication can use the HyperText Transfer Protocol Secure (HTTPS) in conjunction with Transport Layer Security (TLS) or Secure Sockets Layer (SSL).

A further aspect of the present invention is a system comprising a pre-fetching web proxy server for speeding up web applications. A client system interacts with the system as a web proxy or, in case of encrypted communication, as a man-in-the-middle web server that is forwarding the requests. The web proxy interacts with a web server to send HTTP/HTTPS requests and receive HTTP/HTTPS responses. As the pre-fetching web server has to cache pre-fetched pages, the server is connected to a cache, e.g. a database. To configure the pre-fetching process, the proxy server receives configuration files. Such a configuration file comprises:
decision rules which HTTP requests (URL, host, GET parameters, POST content, cookies etc.) result in the pre-fetching process to start (condition when to pre-fetch);
transformation rules to transform an HTTP request and the associated HTTP response into additional HTTP requests used for pre-fetching (pre-fetching action);
optionally a first specification which elements of the HTTP request are necessary for the identification of the requesting client (e.g. which cookies uniquely identify the user); and optionally a second specification when to set pre-fetched data as being out-of-date (e.g. amount of time, client request of the data).
Hence, the system uses a configuration file storage for storing such a configuration file.

A further aspect of the present invention is a method for Quality of Service management. In case the pre-fetching web proxy is overloaded and cannot handle all pre-fetching requests in a timely manner, the different priorities to certain hosts or users of a host can be configured in the system. For prioritizing hosts, a priority configuration file specifies which host configuration file is given which priority level. For prioritizing a user, a host configuration file contains a list of users in form of filled-out identification parameters with the respective priority levels. If a host has been given priority for pre-fetching, the URL in an HTTP request is used to identify if QoS management should be performed. If a user has been given priority for pre-fetching for a certain host, the configuration file for that host specifies how to identify if a user is subject to QoS management. The pre-fetching requests generated based on the host's configuration file for the specific user will then be handled before other pre-fetching requests, thereby increasing the likelihood for subsequent requests to already have been pre-fetched.

This invention contributes a system and method to reduce the time between an HTTP request and the reception of the HTTP response by the user, especially for resources that contain user-specific content and for XMLHttpRequests.

### Brief Description of the drawings

The method and the related system according to the invention are described in more detail herein below by way of exemplary embodiments and with reference to the attached drawings, in which:
- Fig. 1: shows a flow diagram of a state of the art pre-fetching proxy interaction for handling HTTP request;
- Fig. 2: shows a system configuration according to an embodiment of the present invention;
- Fig. 3: shows a flow diagram of a system interaction for handling a first HTTP request; requesting resource that due to configuration files result in pre-fetching request;
- Fig. 4: shows a flow diagram of a system interaction for handling a subsequent HTTP request; and
- Fig. 5: shows an example of a configuration file.

### Detailed description of the invention by means of exemplary embodiments

The method of interaction of the different components is depicted in Fig. 2. The system comprises a pre-fetching web proxy server 22 that is connected to a cache 23. The pre-fetching web proxy server comprises a configuration file storage 24. A client computer 21 is connected to the pre-fetching web proxy server 22. The pre-fetching web proxy server 22 is further connected to web servers over the Internet 25.

The pre-fetching web proxy server is configured by means of a pre-fetching configuration file. The pre-fetching configuration file is written for a specific host, optionally by the content provider, the operator of the pre-fetching web proxy server or a user. Writing the file is preferably assisted by a tool that analyses the communication between the client and the web proxy and proposes rules. Then the configuration file is uploaded to the pre-fetching web proxy server. The pre-fetching web proxy server uses the configuration file for each request of a specific user made over the web proxy server to identify if further requests should be done for pre-fetching.

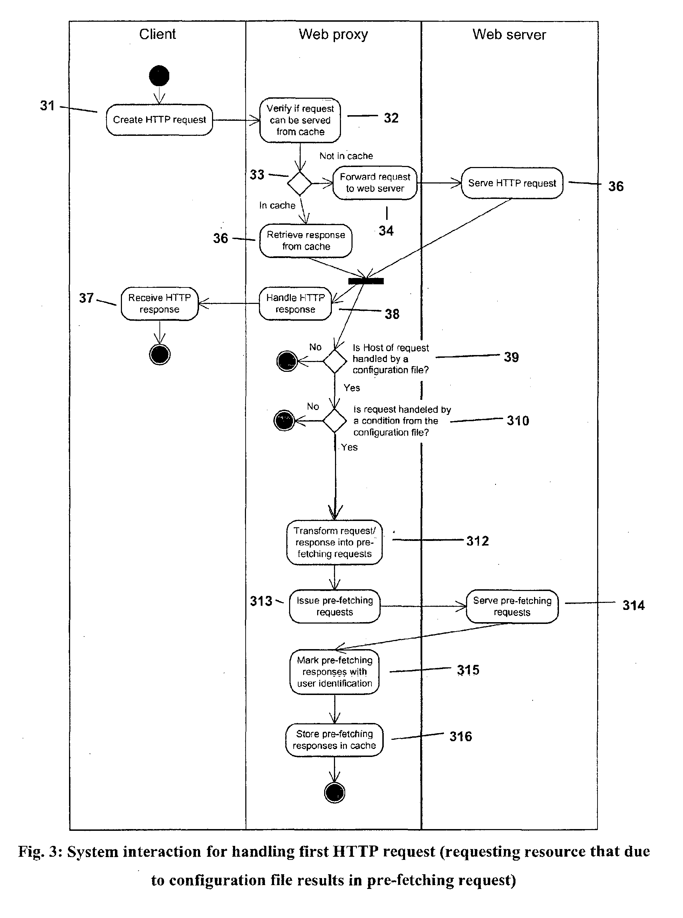

Fig. 3 shows a flow diagram for an interaction for handling a first user specific HTTP request in a system as shown in Fig. 2. For each HTTP request created by the client computer 21 to be routed over the web-proxy 22 in step 31, the usual handling for that request is to verify if the request can be served from the cache 23, step 32. In case the request cannot be served from the cache, the request is forwarded to the web server 25, step 34. The web server 25 then serves the HTTP request, step 35. In case the HTTP request can be served from the cache 23, the response is retrieved from the cache in step 36. The request is handled as usual: It is either served from the cache, or forwarded to the web server, and the response is forwarded to the client computer, step 37. The present invention comprises the use of at least one configuration file. In contrast to the usual handling of an HTTP request to be routed over the web proxy with the present invention it is further checked if a configuration file is available for the requested host in the configuration file storage 24, step 39. If a configuration file is available it is checked if the request comprising preferably URL, GET parameters, POST content, cookies matches the pre-fetching instructions of the configuration file, step 310. If a match is found, relevant cookies can be optionally identified at this stage. Then, the instructions from the configuration file are used to transform the request and the associated response into a set of additional requests in step 312. Cookies from the original request are included in the additional request. The additional pre-fetching requests are sent from the web proxy to the web server, step 313. The web server serves the pre-fetching requests and sends responses to the web proxy, step 314. This is done independently of the caching information specified in the HTTP header. The cached responses are indexed by a signature created from the whole request, including information identifying the requesting client like cookies and IP address, step 315. The necessary information might be specified in the configuration file. This is done to ensure that the pre-fetched response is always delivered to the right user. The pre-fetching responses are stored in the cache of the web proxy, step 316.

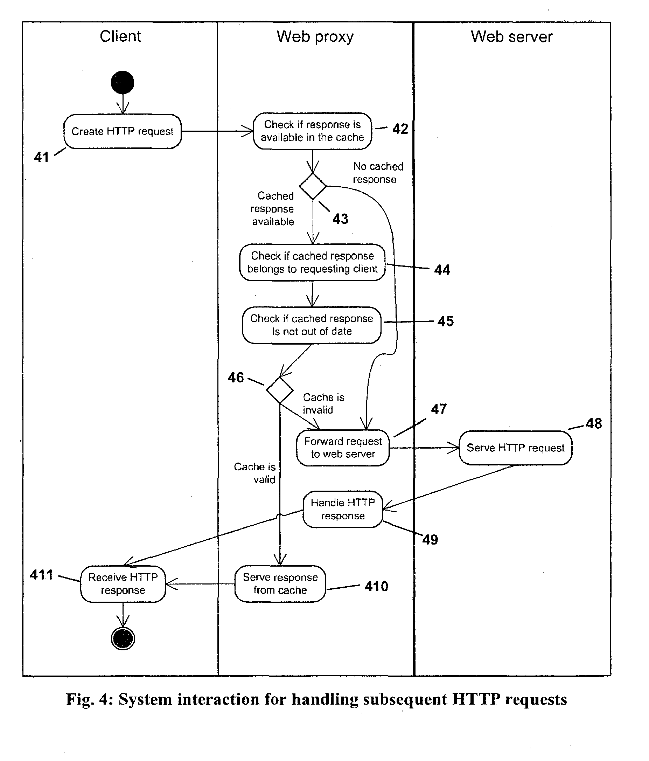

The procedure for handling a subsequent user specific HTTP request for pre-fetched content in a system as shown in Fig. 2 is depicted in Fig. 4. A HTTP request created by the client computer 21 is forwarded to the web-proxy server 22 in step 41. Then it is checked if a response is available in the cache 23 from prior pre-fetching, steps 42 and 43. If no response is cached, step 47 will follow. Otherwise, if content is requested that has been pre-fetched and can be served from cache according to state-of-the-art freshness verification, it is verified if the pre-fetched content belongs to the requestor in step 44. The requestor is to be uniquely identified by means of identifying information like cookies and IP address. These are compared to the information used for pre-fetching. The elements identifying the requestor can be included in the configuration file. Subsequently, in step 45, it is checked that the pre-fetched content is not out of date. Pre-fetched content could be set out of date once it has been requested by the requestor. It will always be set out of date after a certain period of time. The specification when to set content out of date can be included in the configuration file. If the two conditions of steps 44 and 45 hold, i.e. the request including the identifying information matches the pre-fetched content and the content is up-to-date, the response is taken from the cache 23 in step 410. Otherwise the request is forwarded to the web server 25 in step 47. The HTTP request is served by the web server 25 in step 48. The HTTP response is handled by the web proxy 22 in step 49. The HTTP response is received by the client computer 21 either from the web-proxy's cache or from the served request by the web server in step 411 by applying relevant state-of-the-art web caching techniques.

In one embodiment the HTTP request uses the GET or POST method and comprises at least one of the following information: URL including GET parameters if applicable, host name and/or cookies, for example from the HTTP header, and the message body in case of a POST request.

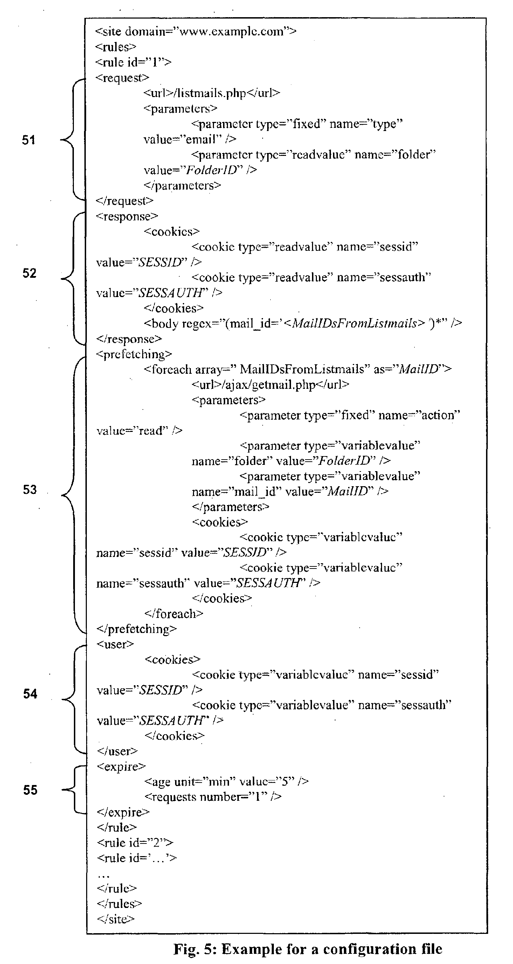

One embodiment of a configuration file will be described by reference to the program listing shown in Fig. 5. The script contains a number of rules with a specific identifier, abbreviated with id 1, id 2, ...up to a maximum number of ids. Here, the domain name "example.com" is an embodiment of the claimed term "website or host".

### Rule 1 of the configuration file contains

- decision rules which HTTP requests result in the pre-fetching request to start in the request section 51. A rule contains a URL that triggers a prefetching event and optionally the required parameters. Optionally, parameters can be set as variables for use in the further sections.
- transformation rules to transform an HTTP request and the associated HTTP response in the response section 52 into additional HTTP requests used for pre-fetching in the pre-fetching section 53. A rule specifies which parts of a HTTP request or response lead to further requests and how the further requests are constructed from the HTTP request and response, incl. GET/POST parameters and cookies.
- a first specification which elements of the HTTP request are necessary for the identification of the requesting client in the user section 54, e.g. which cookies and which parameters from the HTTP request; and
- a second specification when to set pre-fetched data as being out of date in the expire section 55.

The decision rules, transformation rules, first and second specification can be defined for each rule that is identified by its identifier.

The method according to the present invention differs from state-of-the-art methods as described with reference to Fig. 1 at least with respect to the following points:

In contrast to the state of the art where the identification of pre-fetching requests is based on the content and/or response solely, with the present invention the identification of the pre-fetching request is based on the configuration file. This enables caching of private resources on the pre-fetching proxy which so far was only possible by the user's web browser. With the present invention HTTP headers related to caching can be overridden. One further distinguishing feature from the state of the art is that user-specific cookies can be included in the pre-fetching requests. Also, a user-specific signature for cached resources may be created within the present invention where so far such user-specific information had been discarded. Moreover, the pre-fetching is specialized to handle XHR, i.e. asynchronous communication handled by a programming interface in the client's web browser between a web site and the web server where in contrast within the state of the art only general HTTP requests were handled. Furthermore, QoS management to handle pre-fetching requests for a certain site or the site's user with priority may be implemented within the present invention.

While the invention has been illustrated and described in detail in the drawings and foregoing description, such illustration and description are to be considered illustrative or exemplary and not restrictive. It will be understood that changes and modifications may be made by those of ordinary skill within the scope of the following claims.

## Claims

1. Method for handling an HTTP/HTTPS request by using a pre-fetching web proxy server, comprising the following steps:
a) checking whether a pre-fetching configuration file is available for a specific website for each HTTP/HTTPS request being routed over the pre-fetching web proxy server (22),
b) if a pre-fetching configuration file is available for an HTTP/HTTPS request, using the pre-fetching configuration file to identify if further requests should be done for pre-fetching, **characterized by** the steps of:
configuring the pre-fetching web proxy server such that different priorities are given to certain websites and users of a website,
providing a priority configuration file which comprises information for specifying a priority level which is given to a respective pre-fetching configuration file,
wherein the pre-fetching configuration file comprises a list of users with respective priority levels, wherein the list of users preferably is provided in the form of filled-out identification parameters, and
performing a quality of service management if a website has been given priority for pre-fetching, wherein preferably the URL or host in a HTTP/HTTPS request is used to identify if a quality of service management should be performed, and
identifying whether a user is subject to a quality of service management if a user has been given priority for pre-fetching for a certain website, wherein the pre-fetching configuration file for that website specifies how to identify if a user is subject to a quality of service management.

2. Method of claim 1, further comprising the steps of
checking if the pre-fetching configuration file is available for a host contained in a respective HTTP/HTTPS request,
if a pre-fetching configuration file is available, checking if the HTTP/HTTPS request comprises information (URL, GET parameters, host name, cookies, message body for POST requests) which match pre-fetching instructions in the respective pre-fetching configuration file,
handling the HTTP/HTTPS request by either serving the respective information from a cache (23) of the pre-fetching web proxy (22) to a client (21), or by forwarding the HTTP request to a web server (25) and forwarding a response from the web server (25) to the client (21),
if a match is found in the pre-fetching configuration file, using instructions from the pre-fetching configuration file to transform the HTTP/HTTPS request and the associated response into a set of additional requests, wherein cookies from the HTTP/HTTPS request can be included in the additional requests, and
pre-fetching additional requests and storing the corresponding responses in the cache (23) of the pre-fetching web proxy server (22).

3. Method of claim 2, further comprising the step of:
indexing responses being stored in the cache (23) of the pre-fetching web proxy server (22), preferably using a signature created from the whole HTTP/HTTPS request and information from the IP header, preferably comprising information for uniquely identifying a requesting client, for example cookies, GET/POST parameters and an IP source address, wherein the pre-fetching configuration file may comprise the necessary information for uniquely identifying a requesting client (21).

4. Method of any of claims 1 to 3 for handling at least one subsequent HTTP/HTTPS request for pre-fetched content, further comprising the following steps:
if content is requested that has been pre-fetched, verifying if the pre-fetched content belongs to the requesting client and optionally verifying whether the pre-fetched content is out-of-date,
if the request including the identifying information matches the pre-fetched content and optionally the content is up to date, retrieving the response from the cache (23),
otherwise, the request is handled in the usual way.

5. Method of claim 4, further comprising the steps of:
comparing identifying information, for example cookies, GET/POST parameters and IP source address, with information used for pre-fetching, wherein a pre-fetching configuration file preferably comprises elements uniquely identifying a requesting client (21), and
preferably setting a pre-fetched content to be out-of-date once it has been requested by a client (21), and/or after a certain period of time, wherein preferably the pre-fetching configuration file comprises information about the condition upon which a pre-fetched content is to be set out-of-date.

6. Method according to claim 5, further comprising the step of determining the order of handling pre-fetching requests on the basis of the priorities given to the website's host name and/or users of a website.

7. Method according to any of claims 1 to 6, further comprising configuring the prefetching web proxy server comprising the following steps:
a) writing a pre-fetching configuration file for a specific website or host,
b) up-loading the pre-fetching configuration file to the pre-fetching web proxy server (22) and
c) using the pre-fetching configuration file by the web proxy server when receiving a request for a specific website or host, wherein the web proxy server identifies whether further requests should be done for pre-fetching.

8. Method according to claim 7, wherein the pre-fetching configuration file comprises:
i) decision rules for determining which HTTP/HTTPS requests result in a corresponding pre-fetching process and
ii) transformation rules for determining how to transform an HTTP/HTTPS request and the associated HTTP/HTTPS response into additional HTTP/HTTPS requests used for pre-fetching, and
iii) optionally a first specification for determining which elements of an HTTP/HTTPS request are used for an identification of a requesting client, and/or
iv) optionally a second specification for determining when to set pre-fetched data as being out-to-date.

9. Method according to claim 8, wherein the HTTP/HTTPS request uses the GET or POST method and comprises URL and host name and preferably at least one of the following information: URL including GET parameters, if applicable, cookies from HTTP/HTTPS header and the message body in case of a POST request.

10. A pre-fetching web proxy server (22) comprising a storage means (24) for storing at least one pre-fetching configuration file and configured to perform a method according to any of claims 1 to 9.

11. System for handling a HTTP/HTTPS request, according to a method according to any of claims 1 to 9, comprising a pre-fetching web proxy server according to claim 10, a client computer (21) being connected to the pre-fetching web proxy server (22), and a web server (25) being connected to the pre-fetching web proxy server (22), wherein the pre-fetching web proxy server (22) comprises a cache (23) and a configuration file storage (24).

12. A computer program product storing a program being capable of executing the method according to any of claims 1 to 9.

## Patentansprüche

1. Verfahren zum Behandeln einer HTTP/HTTPS-Anfrage unter Verwendung eines vorab abrufenden Web-Proxy-Servers, welches die folgenden Schritte aufweist:
a) Prüfen, ob eine Vorababrufkonfigurationsdatei für eine spezifische Webseite zur Verfügung steht, für jede HTTP/HTTPS-Anfrage, die über den vorab abrufenden Web-Proxy-Server (22) geleitet wird,
b) falls eine Vorababrufkonfigurationsdatei für eine HTTP/HTTPS-Anfrage zur Verfügung steht, Verwenden der Vorababrufkonfigurationsdatei, um zu identifizieren, ob weitere Anfragen für das Vorababrufen erfolgen sollten, **gekennzeichnet durch** folgende Schritte:
Konfigurieren des vorab abrufenden Web-Proxy-Servers, so dass bestimmten Webseiten und Benutzern einer Webseite unterschiedliche Prioritäten gegeben werden,
Bereitstellen einer Prioritätskonfigurationsdatei, welche Informationen zum Spezifizieren eines Prioritätsniveaus, das einer jeweiligen Vorababrufkonfigurationsdatei gegeben wird, aufweist,
wobei die Vorababruflconfigurationsdatei eine Liste von Benutzern mit jeweiligen Prioritätsniveaus aufweist, wobei die Liste von Benutzern vorzugsweise in Form ausgefüllter Identifikationsparameter bereitgestellt wird, und
Ausführen einer Dienstqualitätsverwaltung, falls einer Webseite eine Priorität für einen Vorababruf gegeben wurde, wobei vorzugsweise die URL oder der Host in einer HTTP/HTTPS-Anfrage verwendet wird, um zu identifizieren, ob eine Dienstqualitätsverwaltung ausgeführt werden sollte, und
Identifizieren, ob ein Benutzer einer Dienstqualitätsverwaltung unterzogen wird, falls einem Benutzer eine Priorität für einen Vorababruf für eine bestimmte Webseite gegeben wurde, wobei die Vorababrufkonfigurationsdatei für diese Webseite spezifiziert, wie zu identifizieren ist, ob ein Benutzer einer Dienstqualitätsverwaltung unterzogen wird.

2. Verfahren nach Anspruch 1, welches ferner folgende Schritte aufweist:
Prüfen, ob die Vorababrufkonfigurationsdatei für einen Host zur Verfügung steht, der in einer jeweiligen HTTP/HTTPS-Anfrage enthalten ist,
falls eine Vorababrufkonfigurationsdatei zur Verfügung steht, Prüfen, ob die HTTP/HTTPS-Anfrage Informationen (URL, GET-Parameter, Hostname, Cookies, Nachrichtenkörper für POST-Anfragen) aufweist, die mit Vorababrufanweisungen in der jeweiligen Vorababrufkonfigurationsdatei übereinstimmen,
Behandeln der HTTP/HTTPS-Anfrage entweder durch Übermitteln der jeweiligen Informationen aus einem Cache (23) des vorab abrufenden Web-Proxys (22) an einen Client (21) oder durch Weiterleiten der HTTP-Anfrage an einen Web-Server (25) und Weiterleiten einer Antwort vom Web-Server (25) zum Client (21),
falls eine Übereinstimmung in der Vorababrufkonfigurationsdatei gefunden wird, Verwenden von Anweisungen aus der Vorababrufkonfigurationsdatei, um die HTTP/HTTPS-Anfrage und die zugehörige Antwort in einen Satz zusätzlicher Anfragen umzuwandeln, wobei Cookies aus der HTTP/HTTPS-Anfrage in die zusätzlichen Anfragen aufgenommen werden können, und
Vorababrufen zusätzlicher Anfragen und Speichern der entsprechenden Antworten im Cache (23) des vorab abrufenden Web-Proxy-Servers (22).

3. Verfahren nach Anspruch 2, welches ferner folgenden Schritt aufweist:
Indexieren von Antworten, die im Cache (23) des vorab abrufenden Web-Proxy-Servers (22) gespeichert sind, vorzugsweise unter Verwendung einer anhand der gesamten HTTP/HTTPS-Anfrage und Informationen vom IP-Header erzeugten Signatur, vorzugsweise unter Einschluss von Informationen zum eindeutigen Identifizieren eines anfragenden Clients, beispielsweise Cookies, GET/POST-Parameter und eine IP-Quelladresse, wobei die Vorababrufkonfigurationsdatei die erforderlichen Informationen zum eindeutigen Identifizieren eines anfragenden Clients (21) aufweisen kann.

4. Verfahren nach einem der Ansprüche 1 bis 3 zum Behandeln mindestens einer anschließenden HTTP/HTTPS-Anfrage für vorab abgerufenen Inhalt, welches ferner die folgenden Schritte aufweist:
falls Inhalt angefragt wird, der vorab abgerufen wurde, Überprüfen, ob der vorab abgerufene Inhalt zum anfragenden Client gehört, und optional Überprüfen, ob der vorab abgerufene Inhalt veraltet ist,
falls die Anfrage, welche die identifizierenden Informationen aufweist, mit dem vorab abgerufenen Inhalt übereinstimmt und optional der Inhalt aktuell ist, Abrufen der Antwort aus dem Cache (23),
andernfalls wird die Anfrage in der üblichen Weise behandelt.

5. Verfahren nach Anspruch 4, welches ferner die folgenden Schritte aufweist:
Vergleichen von identifizierenden Informationen, beispielsweise Cookies, GET/POST-Parameter und IP-Quelladresse, mit für das Vorabrufen verwendeten Informationen, wobei eine Vorababrufkonfigurationsdatei vorzugsweise Elemente aufweist, welche einen anfragenden Client (21) eindeutig identifizieren, und
vorzugsweise Festlegen eines vorab abgerufenen Inhalts als veraltet, sobald er von einem Client (21) angefragt wurde, und/oder nach einem bestimmten Zeitraum, wobei vorzugsweise die Vorababrufkonfigurationsdatei Informationen über die Bedingung aufweist, nach der ein vorab abgerufener Inhalt als veraltet festzulegen ist.

6. Verfahren nach Anspruch 5, welches ferner den Schritt des Bestimmens der Reihenfolge der Behandlung von Vorababrufanfragen auf der Grundlage der Prioritäten, die dem Hostnamen der Webseite und/oder dem Benutzer einer Webseite gegeben sind, aufweist.

7. Verfahren nach einem der Ansprüche 1 bis 6, welches ferner das Konfigurieren des vorab abrufenden Web-Proxy-Servers mit den folgenden Schritten aufweist:
a) Schreiben einer Vorababrufkonfigurationsdatei für eine spezifische Webseite oder einen spezifischen Host,
b) Hochladen der Vorababrufkonfigurationsdatei auf den vorab abrufenden Web-Proxy-Server (22) und
c) Verwenden der Vorababrufkonfigurationsdatei durch den Web-Proxy-Server, wenn eine Anfrage für eine spezifische Webseite oder einen spezifischen Host empfangen wird, wobei der Web-Proxy-Server identifiziert, ob weitere Anfragen für das Vorababrufen erfolgen sollten.

8. Verfahren nach Anspruch 7, wobei die Vorababrufkonfigurationsdatei Folgendes aufweist:
i) Entscheidungsregeln zum Bestimmen, welche HTTP/HTTPS-Anfragen zu einem entsprechenden Vorababrufprozess führen, und
ii) Transformationsregeln zum Bestimmen, wie eine HTTP/HTTPS-Anfrage und die zugeordnete HTTP/HTTPS-Antwort in zusätzliche HTTP/HTTPS-Anfragen zu transformieren sind, die für den Vorababruf verwendet werden, und
iii) optional eine erste Spezifikation zum Bestimmen, welche Elemente einer HTTP/HTTPS-Anfrage für eine Identifikation eines anfragenden Clients verwendet werden, und/oder
iv) optional eine zweite Spezifikation zum Bestimmen, wann Vorababrufdaten als veraltet festzulegen sind.

9. Verfahren nach Anspruch 8, wobei die HTTP/HTTPS-Anfrage das GET- oder das POST-Verfahren verwendet und die URL und den Hostnamen und vorzugsweise mindestens eine der folgenden Informationen aufweist: URL, einschließlich GET-Parametern, falls anwendbar, Cookies vom HTTP/HTTPS-Header und den Nachrichtenkörper im Fall einer POST-Anfrage.

10. Vorab abrufender Web-Proxy-Server (22), der eine Speichereinrichtung (24) zum Speichern mindestens einer Vorababrufkonfigurationsdatei aufweist und dafür ausgelegt ist, ein Verfahren nach einem der Ansprüche 1 bis 9 auszuführen.

11. System zum Behandeln einer HTTP/HTTPS-Anfrage gemäß einem Verfahren nach einem der Ansprüche 1 bis 9, welches einen vorab abrufenden Web-Proxy-Server nach Anspruch 10, einen Clientcomputer (21), der mit dem vorab abrufenden Web-Proxy-Server (22) verbunden ist, und einen Web-Server (25), der mit dem vorab abrufenden Web-Proxy-Server (22) verbunden ist, aufweist, wobei der vorab abrufende Web-Proxy-Server (22) einen Cache (23) und einen Konfigurationsdateispeicher (24) aufweist.

12. Computerprogrammprodukt, welches ein Programm speichert, das in der Lage ist, das Verfahren nach einem der Ansprüche 1 bis 9 auszuführen.

## Revendications

1. Procédé de traitement d'une demande HTTP/HTTPS recourant à un serveur proxy Web de pré-chargement, comprenant les étapes suivantes :
a) contrôle si un fichier de configuration de pré-chargement est disponible pour un site Web spécifique pour chaque demande HTTP/HTTPS acheminée via le serveur proxy Web de pré-chargement (22),
b) si un fichier de configuration de pré-chargement est disponible pour une demande HTTP/HTTPS, recours au fichier de configuration de pré-chargement pour identifier si d'autres demandes doivent être émises pour pré-chargement, **caractérisé par** les étapes :
de configuration du serveur proxy Web de pré-chargement de manière à attribuer des priorités différentes à certains sites Web et utilisateurs d'un site Web,
création d'un fichier de configuration de priorité comprenant une information pour la spécification d'un niveau de priorité attribué à un fichier de configuration de pré-chargement correspondant, et
le fichier de configuration de pré-chargement comprenant une liste d'utilisateurs avec des niveaux de priorité correspondants, la liste des utilisateurs étant préférentiellement prévue sous la forme d'une liste de paramètres d'identification, et
d'exécution d'une qualité de gestion de service si une priorité de pré-chargement a été attribuée à un site Web, où l'URL ou l'hôte dans une demande HTTP/HTTPS étant préférentiellement exploités pour identifier si une qualité de gestion de service doit être exécutée, et
d'identification si un utilisateur fait l'objet d'une qualité de gestion de service quand une priorité de pré-chargement a été attribuée à un utilisateur pour un certain site Web, le fichier de configuration de pré-chargement pour ledit site Web spécifiant comment identifier si un utilisateur fait l'objet d'une qualité de gestion de service.

2. Procédé selon la revendication 1, comprenant en outre les étapes de contrôle si le fichier de configuration de pré-chargement est disponible pour un hôte compris dans une demande HTTP/HTTPS correspondante,
et, si un fichier de configuration de pré-chargement est disponible, de contrôle si la demande HTTP/HTTPS comprend une information (URL, paramètres GET, nom d'hôte, cookies, corps de message pour demandes POST) correspondant à des instructions de pré-chargement dans le fichier de configuration de pré-chargement correspondant,
de traitement de la demande HTTP/HTTPS soit par transmission de l'information correspondante d'un cache (23) du serveur proxy Web de pré-chargement (22) à un client (21), soit par transfert de la demande HTTP à un serveur Web (25) et transmission d'une réponse du serveur Web (25) au client (21),
et, si une correspondance est trouvée dans le fichier de configuration de pré-chargement, de recours à des instructions du fichier de configuration de pré-chargement pour transformer la demande HTTP/HTTPS et la réponse associée en un ensemble de demandes complémentaires, des cookies de la demande HTTP/HTTPS pouvant être compris dans les demandes complémentaires, et
de pré-chargement de demandes complémentaires et de mémorisation des réponses correspondantes dans le cache (23) du serveur proxy Web de pré-chargement (22).

3. Procédé selon la revendication 2, comprenant en outre l'étape :
d'indexation des réponses mémorisées dans le cache (23) du serveur proxy Web de pré-chargement (22), en recourant préférentiellement à une signature créée par l'ensemble de la demande HTTP/HTTPS et à une information de l'en-tête IP, comprenant préférentiellement une information pour identifier uniquement un client demandeur, par exemple des cookies, des paramètres GET/POST et une adresse source IP, le fichier de configuration de pré-chargement pouvant comprendre l'information exigée pour identifier uniquement un client demandeur (21).

4. Procédé selon l'une des revendications 1 à 3, pour le traitement d'au moins une demande HTTP/HTTPS subséquente pour un contenu pré-chargé, comprenant en outre les étapes suivantes :
si un contenu demandé a été pré-chargé, vérification si le contenu pré-chargé appartient au client demandeur et vérification optionnelle si le contenu pré-chargé est périmé,
si la demande comprenant l'information d'identification correspond au contenu pré-chargé et que le contenu pré-chargé est optionnellement à jour, extraction de la réponse du cache (23),
sinon, traitement de la demande de la manière habituelle.

5. Procédé selon la revendication 4, comprenant en outre les étapes :
de comparaison d'une information d'identification, par exemple des cookies, des paramètres GET/POST et une adresse source IP, avec une information exploitée pour un pré-chargement, un fichier de configuration de pré-chargement comprenant préférentiellement des éléments identifiant uniquement un client demandeur (21), et
de définition préférentielle d'un contenu pré-chargé comme étant périmé après avoir été demandé par un client (21), et/ou après un certain intervalle temporel, le fichier de configuration de pré-chargement comprenant préférentiellement une information relative à la condition où un contenu pré-chargé doit être défini comme étant périmé.

6. Procédé selon la revendication 5, comprenant en outre l'étape de détermination de l'ordre de traitement des demandes de pré-chargement sur la base des priorités attribuées au nom d'hôte du site Web et/ou aux utilisateurs d'un site Web.

7. Procédé selon l'une des revendications 1 à 6, comprenant en outre la configuration du serveur proxy Web de pré-chargement, comprenant les étapes suivantes :
a) écriture d'un fichier de configuration de pré-chargement pour un site Web ou un hôte spécifique,
b) chargement du fichier de configuration de pré-chargement sur le serveur proxy Web de pré-chargement (22), et
c) exploitation du fichier de configuration de pré-chargement par le serveur proxy Web à la réception d'une demande pour un site Web ou un hôte spécifique, le serveur proxy Web identifiant si d'autres demandes de pré-chargement doivent être émises.

8. Procédé selon la revendication 7, où le fichier de configuration de pré-chargement comprend :
i) des règles de décision pour déterminer quelles demandes HTTP/HTTPS aboutissent à un processus de pré-chargement correspondant, et
ii) des règles de transformation pour déterminer comment transformer une demande HTTP/HTTPS et la réponse HTTP/HTTPS associée en demandes HTTP/HTTPS complémentaires exploitées pour un pré-chargement, et
iii) une première spécification optionnelle pour déterminer quels éléments d'une demande HTTP/HTTPS sont exploités pour une identification d'un client demandeur, et/ou
iv) une deuxième spécification optionnelle pour déterminer quand définir des données pré-chargées comme étant périmées.

9. Procédé selon la revendication 8, où la demande HTTP/HTTPS recourt à la procédure GET ou POST et comprend une URL et un nom d'hôte, et préférentiellement au moins une des informations suivantes : URL comprenant paramètres GET, si applicable, cookies d'en-tête HTTP/HTTPS et le corps de message en cas de demande POST.

10. Serveur proxy Web de pré-chargement (22) comprenant un moyen de mémorisation (24) pour la mémorisation d'au moins un fichier de configuration de pré-chargement et configuré pour exécuter un procédé selon l'une des revendications 1 à 9.

11. Système pour le traitement d'une demande HTTP/HTTPS, suivant un procédé selon l'une des revendications 1 à 9, comprenant un serveur proxy Web de pré-chargement selon la revendication 10, un ordinateur client (21) relié au serveur proxy Web de pré-chargement (22), et un serveur Web (25) relié à un serveur proxy Web de pré-chargement (22), le serveur proxy Web de pré-chargement (22) comprenant un cache (23) et une mémoire de fichier de configuration (24).

12. Produit de programme informatique mémorisant un programme apte à exécuter le procédé selon l'une des revendications 1 à 9.
